# EUROPEAN PATENT SPECIFICATION

(11) **EP 1 653 641 B1**
(45) Date of publication and mention of the grant of the patent: **15.12.2010**
(21) Application number: 04292582.6
(22) Date of filing: 29.10.2004
(51) Int. Cl.: H04B 10/20

(54) **Optical access node**
Optischer Zugriffsknoten
Noeud d'accès optique

(43) Date of publication of application: 03.05.2006
(73) Proprietor: Alcatel Lucent, 75008 Paris (FR)
(72) Inventor: De Vos, Benoit, 1000 Brussels (BE)
(74) Representative: Narmon, Gisèle Marie Thérèse

(56) References cited:
- EP-A- 1 041 852
- EP-A- 1 195 939
- GB-A- 2 282 034
- US-A- 5 128 789
- US-A1- 2003 030 871

## Description

The invention relates to an optical access node comprising a first optical line termination to be coupled to a first network;
a first optical component coupled to the first optical line termination and to be coupled to a first customer premises equipment via a first optical unit;
a second optical line termination to be coupled to a second network;
a second optical component coupled to the second optical line termination and to be coupled to a second customer premises equipment via a second optical unit; and
redundancy means for providing redundancy for at least one optical line termination.

The optical components for example each comprise one or more optical splitters and/or one or more optical combiners, and the optical units for example each comprise one or more optical network units and/or one or more optical distribution networks, all common in the art.

A prior art optical access node is known from US 2002/0030865, which discloses for example in its Figure 1 and 25 an optical line termination. Further disclosed are redundancy means for providing redundancy for at least one optical line termination. These redundancy means are realized by providing each optical line termination with a working part and a standby part. In other words, each optical line termination comprises two optical line termination parts, a working primary part and a secondary part waiting for the primary part to go down. If the primary part goes down, the secondary part substitutes the primary part.

Furthermore, a protection switching method and apparatus for passive optical network system is known from the European Patent Application with publication number EP 1 041 852. Therein a protection switching method for a passive optical network system is described. When a communication abnormality is detected in at least one active system virtual path established between an optical line terminal and a subscriber terminal through a transmission path and a network unit a switch is controlled to switch the transmission paths to establish a standby-system virtual path between the optical line terminal and the subscriber terminal as a communication partner.

The European Patent Application EP 1 195 939 describes a protection system where one fully redundant parent device is connected via redundant optical networks (a so called current and a so called preliminary network) to a plurality of fully redundant daughter devices. In order to select (dependant on the incurred delay) either one of the fully redundant systems (parent device, network and daughter device) a delay controlling unit as well as a selection switching control is introduced. Furthermore mechanisms are introduced of how to switch between the two fully redundant systems. However the document fails to propose a solution for removing the (very costly) full redundancy, as is the purpose of the current invention.

Furthermore, the UK patent application GB 2 282 034 is proposing a protection transmission channel apparatus (PCA), which provides full protection in the case that the current and the spare units are used for work data and PCA data transmission, respectively, and in the case of failure of one of the current units or one of the spare units. In case of multiple failures, it provides a proposal for partial protection. This is achieved by introducing a so called secondary spare unit coupled with a switching control unit. The document explicitly refers to active PCA systems and does not provide a solution for the failure of multiple links.

The known optical access node is disadvantageous, inter alia, owing to the fact that it is relatively inefficient.

It is an object of the invention, inter alia, to provide an optical access node as defined above which is relatively efficient.

The optical access node according to the invention is characterized in that the redundancy means comprise a redundant optical line termination coupled via switching means to the first and second optical components.

By introducing switching means for coupling the redundant optical line termination to the first and second optical components, the redundant optical line termination forms a substitute for at least one of the first optical line termination and the second optical line termination. As a result, it is no longer necessary to have two optical line termination parts in each optical line termination, and the optical access node according to the invention is relatively efficient in terms of costs and volume. The optical access node according to the invention is therefore less expensive and less bulky.

The redundant optical line termination may form a substitute for at least one of more than two first and second optical line terminations, without departing from the scope of the invention. A first number of redundant optical line terminations may form a substitute for at least one of a second number of first and second optical line terminations, as long as the first number is smaller than the second number, without departing from the scope of the invention.

It should be noted that, in case of the construction of the redundant optical line termination being identical to the construction of the first optical line termination or the construction of the second optical line termination, a complete protection of the first and second optical line terminations may be difficult as the quality of the performance of the optical access node may deteriorate. However, this deterioration may be avoided, when constructing the redundant optical line termination differently from the first optical line termination and the second optical line termination, as follows.

The optical access node according to the invention is characterized in that the first and second optical line terminations are low split line terminations and in that the redundant optical line termination is a high split line termination.

A high split line termination is enabled to support a higher physical split ratio thanks to a higher optical budget compared to the low split line termination and for example compensates for losses caused by the switching means. In addition, the high split line termination may compensate for losses caused by the optical splitters and/or the optical combiners.

An embodiment of the optical access node according to the invention is characterized in that the high split line termination is coupled to power increasing means for increasing a downstream power and/or sensitivity increasing means for increasing an upstream sensitivity and/or loss decreasing means for decreasing a loss of a coupler.

The power increasing means for increasing a downstream power for example comprise a powerful amplifier, the sensitivity increasing means for increasing an upstream sensitivity for example comprise a sensitive detector and the loss decreasing means for example comprise a low loss combiner. Instead of being coupled to these means, alternatively the high split termination may comprise these means. As a result, the optical distribution network can remain passive.

An embodiment of the optical access node according to the invention is characterized in that the switching means comprise a first switch coupled to the first optical component and to the redundant optical line termination and a second switch coupled to the second optical component and to the redundant optical line termination.

In this case, each optical component is coupled via its own switch to the redundant optical line termination.

An embodiment of the optical access node according to the invention is characterized in that the redundant optical line termination is coupled to an upstream branch and a downstream branch, wavelength division multiplexers forming part of both branches and being coupled to the first and second switches and being coupled via a combiner to the redundant optical line termination, and a serial circuit of an amplifier and a power divider forming part of the downstream branch and being coupled to the wavelength division multiplexers.

Owing to the fact that each optical component is coupled via its own switch to the redundant optical line termination, the redundant optical line termination needs to be coupled to the upstream branch and the downstream branch. Alternatively, these branches may form part of the redundant optical line termination. Usually, there will be a wavelength division multiplexer per switch.

An embodiment of the optical access node according to the invention is characterized in that the switching means comprise a third switch with a downstream side being coupled to the first and second optical components and with an upstream side coupled to the redundant optical line termination.

In this case, the optical components are coupled via the same third switch to the redundant optical line termination. This third switch is more advanced than the first and second switches, but allows the redundant optical line termination to be used without an upstream combiner and a downstream splitter and allows the number of wavelength division multiplexers to be reduced.

An embodiment of the optical access node according to the invention is characterized in that the optical access node further comprises
- a back plane for coupling the first optical line termination to the first network and for coupling the second optical line termination to the second network.

The first and second networks may be different networks or not. The redundant optical line termination will be coupled via the back plane to both networks.

The invention further relates to a method for providing redundancy for at least one optical line termination, which at least one optical line termination comprises
- a first optical line termination to be coupled to a first network and coupled to a first optical component which is to be coupled to a first customer premises equipment; and
- a second optical line termination to be coupled to a second network and coupled to a second optical component which is to be coupled to a second customer premises equipment.

The method according to the invention is characterized in that the method comprises the step of switching a redundant optical line termination via switching means coupled to the first and second optical components and also coupled to first and second networks, and in that the first and second optical line terminations are low split line terminations and in that the redundant optical line termination is a high split line termination.

Embodiments of the optical multiplexer according to the invention and of the redundant optical line termination according to the invention and of the method according to the invention correspond with the embodiments of the optical access node according to the invention.

The invention is based upon an insight, inter alia, that it is inefficient to provide each optical line termination with a working part and a standby part, and is based upon a basic idea, inter alia, that a redundant optical line termination may form a redundant optical line termination for a group of optical line terminations by applying switching means.

The invention solves the problem, inter alia, to provide an optical access node as defined above which is relatively efficient, and is advantageous, inter alia, in that its costs and volume are kept at a low level.

These and other aspects of the invention will be apparent from and elucidated with reference to the embodiments(s) described hereinafter.
Fig. 1 shows diagrammatically an optical access node according to the invention comprising an optical multiplexer according to the invention;
Fig. 2 shows diagrammatically a first embodiment of an optical multiplexer according to the invention;
Fig. 3 shows diagrammatically a second embodiment of an optical multiplexer according to the invention; and
Fig. 4 shows diagrammatically a part of an optical multiplexer according to the invention in greater detail.

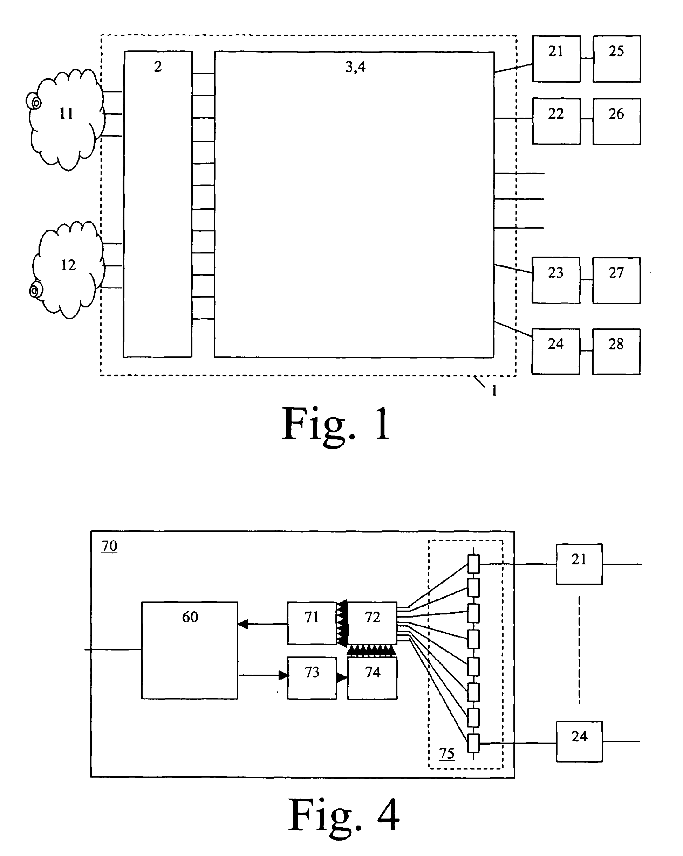

The optical access node 1 according to the invention shown in Fig. 1 comprises an optical multiplexer 3,4 according to the invention of which a first side is (to be) coupled via a back plane 2 to a first network 11 and to a second network 12 and of which a second side is (to be) coupled to customer premises equipments 25-28 via optical units 21-24. These optical units 21-24 for example each comprise one or more optical network units and/or one or more optical distribution networks, all common in the art. The first and second networks 11,12 may be completely separate networks or may form part of a third network with or without being separable form each other.

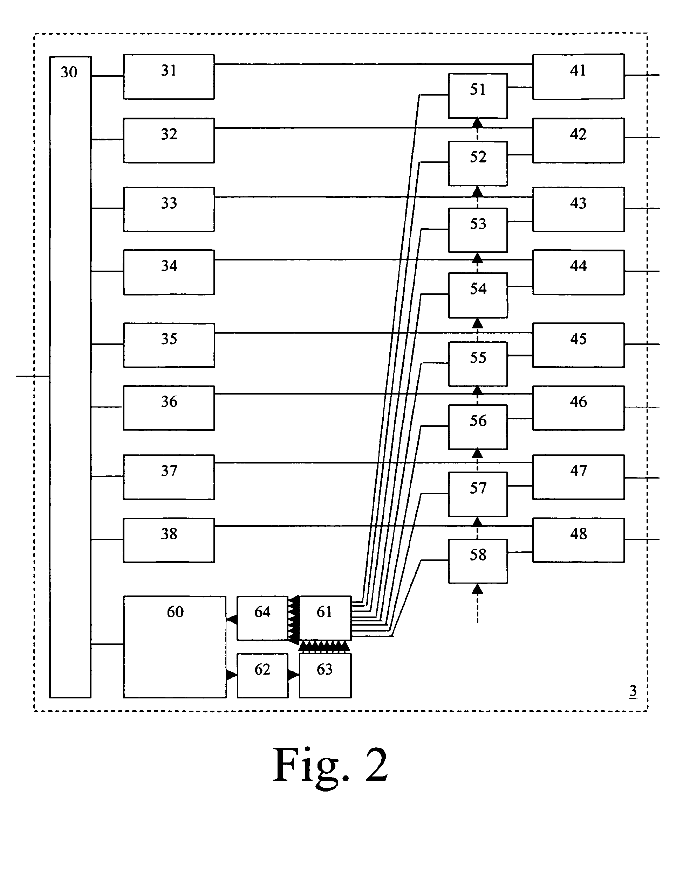

The first embodiment of the multiplexer 3 according to the invention shown in Fig. 2 comprises line terminations 31-38 (to be) coupled to the back plane 2 via a coupler 30 and coupled to optical components 41-48. The optical components 41-48 are coupled to switches 51-58 and are (to be) coupled to the optical units 21-24. The optical components 41-48 for example each comprise one or more optical splitters and/or one or more optical combiners all common in the art. The switches 51-58 are further coupled to eight wavelength division multiplexers 61 which are further coupled to a redundant optical line termination 60 via a combiner 64 and to a power divider 63, which power divider 63 is also coupled via an amplifier 62 to the redundant optical line termination 60. Thereby, an upstream path follows the wavelength division multiplexers 61 and the combiner 64 and the redundant optical line termination 60, and a downstream path follows the redundant optical line termination 60, the amplifier 62, the power divider 63 and the wavelength division multiplexers 61.

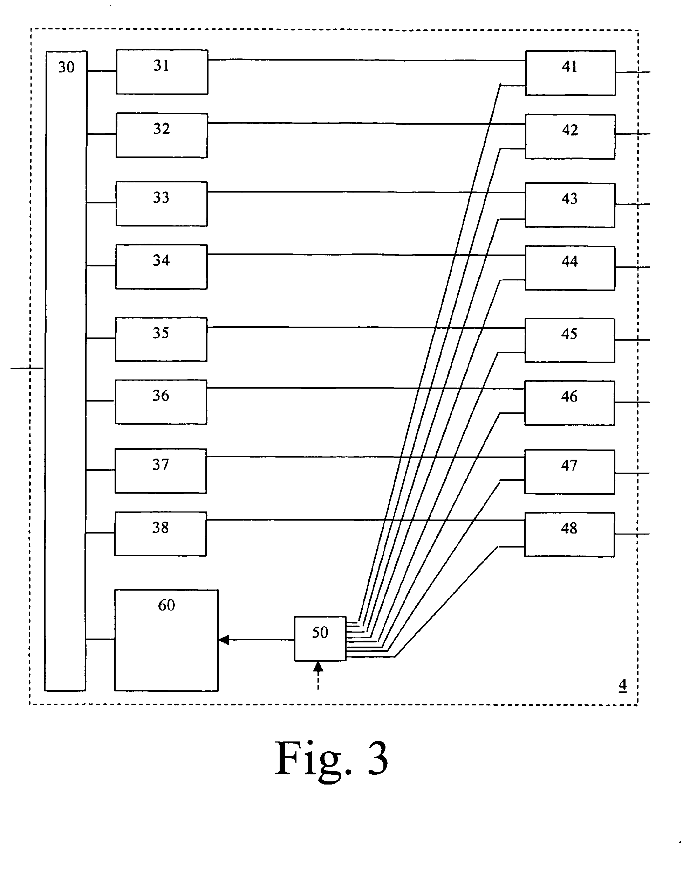

The second embodiment of the multiplexer 4 according to the invention shown in Fig. 3 comprises line terminations 31-38 (to be) coupled to the back plane 2 via a coupler 30 and coupled to optical components 41-48. The optical components 41-48 are (to be) coupled to the optical units 21-24 and are coupled to a switch 50. This switch 50 is further coupled to a redundant optical line termination 60. The optical components 41-48 for example each comprise one or more optical splitters and/or one or more optical combiners.

By introducing the switches 50-58 for coupling the redundant optical line termination 60 to the optical components 41-48, the redundant optical line termination 60 forms a substitute for at least one of the optical line terminations 31-38. As a result, it is no longer necessary to have two optical line termination parts in each optical line termination 31-38, and the optical access node 1 according to the invention is relatively efficient in terms of costs and volume (less bulky and less expensive).

The normal optical line terminations 31-38 are low split line terminations and the redundant optical line termination 60 is a high split line termination. A high split line termination is enabled to support a higher physical split ratio thanks to a higher optical budget compared to the low split line termination and for example compensates for losses caused by the switching means. In addition, the high split line termination may compensate for losses caused by the optical splitters and/or the optical combiners. Such a high split line termination may be coupled to and/or comprise power increasing means for increasing a downstream power and/or sensitivity increasing means for increasing an upstream sensitivity and/or loss decreasing means for decreasing a loss of a coupler. Such power increasing means for increasing a downstream power for example comprise a powerful amplifier, such sensitivity increasing means for increasing an upstream sensitivity for example comprise a sensitive detector and such loss decreasing means for example comprise a low loss combiner. As a result, the optical distribution network can remain passive.

The part 70 of a multiplexer 3,4 according to the invention shown in Fig. 4 in greater detail comprises a redundant optical line termination 60 coupled to a receiver 71 (sensitivity increasing means such as an avalanche photo diode APD or a semiconductor optical amplifier SOA). The receiver 71 is coupled via for example eight couplings to a low loss combiner 72 (loss decreasing means) which is further coupled to switching means 75 and via for example eight couplings to a divider 74. The divider 74 is further coupled to an amplifier 73 (power increasing means such as an erbium doped fiber amplifier EDFA or a high power laser diode HPLD), which amplifier 73 is further coupled to the redundant optical line termination 60. The switching means are coupled to the optical units 21-24. The part 70 for example comprises and/or forms part of a so-called high split optical line terminations, with normal optical line terminations then comprising and/or forming part of so-called low split optical line terminations.

The switches 50-58 are controlled via a detector not shown for detecting a malfunction in an optical line termination (31-38). Such a detector is of common general knowledge to a person skilled in the art and known from the prior art situation according to which each optical line termination comprises two optical line termination parts, a working primary part and a secondary part waiting for the primary part to go down.

In case of the optical line terminations 31-38 being not synchronized, the redundant optical line termination 60 will be able to substitute only one normal optical line termination 31-38 at the same time. However, it is not to be excluded that, in the (near) future, the optical line terminations 31-38 will become synchronized units. Then, the redundant optical line termination 60 will be able to substitute more than one normal optical line termination 31-38 at the same time, under the condition that the speed and the capacity of the coupler 30 and back plane 2 are sufficiently high.

So, the redundant optical line termination 60 may be to a very large extent similar to the normal optical line terminations 31-38. This depends on the way the optical power budget is increased. A difference might be to use a HPLD instead of a normal LD in a downstream direction and/or an APD instead of a normal PD in an upstream direction. There might be implementations in which this is not necessary and the difference can be located outside the redundant optical line termination 60. Another difference between the redundant optical line termination 60 and the normal optical line terminations 31-38 may be some extra logic for synchronization (for the (near) future).

The expression "for" in for example "for providing", "for increasing", "for decreasing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The step/function of switching does not exclude further steps/functions, like for example, inter alia, the steps/functions described for the Fig. 1-4.

## Claims

1. Optical access node (1) comprising
- a first optical line termination (31) to be coupled to a first network (11);
- a first optical component (41), comprising one or more optical splitters and/or combiners, coupled to the first optical line termination (31) and to be coupled to a first customer premises equipment (25) via a first optical unit (21);
- a second optical line termination (32) to be coupled to a second network (12);
- a second optical component (42), comprising one or more optical splitters and/or combiners, coupled to the second optical line termination (32) and to be coupled to a second customer premises equipment (26) via a second optical unit (22); and
- redundancy means (60) for providing redundancy for at least one optical line termination (31, 32);
**characterized in that** the redundancy means (60) comprise a redundant optical line termination (60) coupled to said first network (11) and to said second network (12) and also coupled via switching means (50-52) to the first and second optical components (41, 42);and **in that** the first and second optical line terminations (31,32) are low split line terminations and **in that** the redundant optical line termination (60) is a high split line termination.

2. Optical access node (1) as defined in claim 1, **characterized in that** the high split line termination is coupled to power increasing means for increasing a downstream power and/or sensitivity increasing means for increasing an upstream sensitivity and/or loss decreasing means for decreasing a loss of a coupler.

3. Optical access node (1) as defined in claim 1 or 2, **characterized in that** the switching means comprise a first switch (51) coupled to the first optical component (41) and to the redundant optical line termination (60) and a second switch (52) coupled to the second optical component (42) and to the redundant optical line termination (60).

4. Optical access node (1) as defined in claim 3, **characterized in that** the redundant optical line termination (60) is coupled to an upstream branch and a downstream branch, wavelength division multiplexers (61) forming part of both branches and being coupled to the first and second switches (51,52) and being coupled via a combiner (64) to the redundant optical line termination (60), and a serial circuit of an amplifier (62) and a power divider (63) forming part of the downstream branch and being coupled to the wavelength division multiplexers (61).

5. Optical access node (1) as defined in claim 1 or 2, **characterized in that** the switching means comprise a third switch (50) with a downstream side being coupled to the first and second optical components (41,42) and with an upstream side coupled to the redundant optical line termination (60).

6. Optical access node (1) as defined in claim 1, 2, 3, 4 or 5, **characterized in that** the optical access node (1) further comprises
- a back plane (2) for coupling the first optical line termination (31) to the first network (11) and for coupling the second optical line termination (32) to the second network (12).

7. Optical access node (1) as defined in claim 1, **characterized in that** - said first optical line termination (31) and - said second optical line termination (32) and
- said redundancy means being comprised in an optical multiplexer (3,4).

8. Method for providing redundancy for at least one optical line termination (31, 32), which at least one optical line termination (31,32) comprises
- a first optical line termination (31) to be coupled to a first network (11) and coupled to a first optical component (41), comprising one or more optical splitters and/or combiners, which is to be coupled to a first customer premises equipment (25) via a first optical unit (21); and
- a second optical line termination (32) to be coupled to a second network (12) and coupled to a second optical component (42), comprising one or more optical splitters and/or combiners, which is to be coupled to a second customer premises equipment (26) via a second optical unit (22);
**characterized in that** the method comprises the step of switching a redundant optical line termination (60) via switching means (50-52) coupled to said first network (11) and to said second network (12) and also coupled to the first and second optical components (41, 42) and **in that** the first and second optical line terminations (31, 32) are low split line terminations and **in that** the redundant optical line termination (60) is a high split line termination.

## Patentansprüche

1. Optischer Zugriffsknoten (1), umfassend
- einen ersten optischen Leitungsabschluss (31) zur Kopplung an ein erstes Netzwerk (11);
- eine erste optische Komponente (41), umfassend einen oder mehr optische Splitter und/oder Combiner, welche an den ersten optischen Leitungsabschluss (31) gekoppelt und über eine erste optische Einheit (21) an eine erste Kundenstandort-Ausrüstung (25) zu koppeln sind;
- einen zweiten optischen Leitungsabschluss (32) zur Kopplung an ein zweites Netzwerk (12);
- eine zweite optische Komponente (42), umfassend einen oder mehr optische Splitter und/oder Combiner, welche an den zweiten optischen Leitungsabschluss (32) gekoppelt und über eine zweite optische Einheit (22) an eine zweite Kundenstandort-Ausrüstung (26) zu koppeln sind; und
- Redundanzmittel (60) zum Bereitstellen von Redundanz für mindestens einen optischen Leistungsabschluss (31, 32);
**dadurch gekennzeichnet, dass** die Redundanzmittel (60) einen redundanten optischen Leitungsabschluss (60), welcher an das besagte erste Netzwerk (11) und an das besagte zweite Netzwerk (12) und über Schaltmittel (50-52) ebenfalls an die erste und die zweite optische Komponente (41, 42) angeschlossen sind; und dass der erste und der zweite optische Leitungsabschluss (31, 32) Low-Split-Leitungsabschlüsse sind und dass der redundante optische Leitungsabschluss (60) ein High-Split-Leitungsabschluss ist.

2. Optischer Zugriffsknoten (1) wie in Anspruch 1 definiert, **dadurch gekennzeichnet, dass** der High-Split-Leitungsabschluss an Leistungserhöhungsmittel zum Erhöhen einer Leistung in Abwärtsrichtung und/oder an empfindlichkeitsvergrößernde Mittel zum Vergrößern einer Empfindlichkeit in Aufwärtsrichtung und/oder an Verlustverringerungsmittel zum Verringern eines Verlustes eines Kopplers angeschlossen ist.

3. Optischer Zugriffsknoten (1) wie in Anspruch 1 oder 2 definiert, **dadurch gekennzeichnet, dass** die Schaltmittel einen ersten Schalter (51), der an die erste optische Komponente (41) und an den redundanten optischen Leitungsabschluss (60) gekoppelt ist, und einen zweiten Schalter (52), der an die zweite optische Komponente (42) und an den redundanten optischen Leitungsabschluss (60) gekoppelt ist, umfassen.

4. Optischer Zugriffsknoten (1) wie in Anspruch 3 definiert, **dadurch gekennzeichnet, dass** der redundante optische Leitungsabschluss (60) an eine Verzweigung in Aufwärtsrichtung und an eine Verzweigung in Abwärtsrichtung angeschlossen ist, wobei die Wellenlängenmultiplexer (61) einen Bestandteil der beiden Verzweigungen bilden und an den ersten und den zweiten Schalter (51, 52) und über einen Combiner (64) an den redundanten optischen Leitungsabschluss (60) gekoppelt sind, und dass eine Serienschaltung eines Verstärkers (62) und ein Leistungsteiler (63) einen Bestandteil der Verzweigung in Abwärtsrichtung bilden und an die Wellenlängenmultiplexer (61) gekoppelt ist.

5. Optischer Zugriffsknoten (1) wie in Anspruch 1 oder 2 definiert, **dadurch gekennzeichnet, dass** die Schaltmittel einen dritten Schalter (50), dessen Abwärtsrichtungsseite an die erste und an die zweite optische Komponente (41,42) gekoppelt ist, und dessen Aufwärtsrichtungsseite an den redundanten optischen Leitungsabschluss (60) gekoppelt ist.

6. Optischer Zugriffsknoten (1) wie in Anspruch 1, 2, 3, 4 oder 5 definiert, **dadurch gekennzeichnet, dass** der optische Zugriffsknoten (1) weiterhin umfasst
- eine Busplatine (2) zum Koppeln des ersten optischen Leistungsabschlusses (31) an das erste Netzwerk (11), und zum Koppeln des zweiten optischen Leitungsabschlusses (32) an das zweite Netzwerk (12).

7. Optischer Zugriffsknoten (1) wie in Anspruch 1 definiert, **dadurch gekennzeichnet, dass** der besagte erste optische Leitungsabschluss (31) und der besagte zweite optische Leitungsabschluss (32) und die besagten Redundanzmittel in einem optischen Multiplexer (3, 4) umfasst sind.

8. Verfahren zum Bereitstellen von Redundanz für mindestens einen optischen Leitungsabschluss (31, 32), wobei der mindestens eine optische Leitungsabschluss (31, 32) umfasst
- einen ersten optischen Leitungsabschluss (31) zur Kopplung an ein erstes Netzwerk (11) und welcher an eine erste optische Komponente (41) gekoppelt ist, umfassend einen oder mehr optische Splitter und/oder Combiner, welche über eine erste optische Einheit (21) an eine erste Kundenstandort-Ausrüstung (25) zu koppeln sind; und
- einen zweiten optischen Leitungsabschluss (32) zur Kopplung an ein zweites Netzwerk (12) und welcher an eine zweite optische Komponente (42) gekoppelt ist, umfassend einen oder mehr optische Splitter und/oder Combiner, welcher über eine zweite optische Einheit (22) an eine zweite Kundenstandort-Ausrüstung (26) zu koppeln sind;
**dadurch gekennzeichnet, dass** das Verfahren den Schritt des Schaltens eines redundanten optischen Leitungsabschlusses (60) über Schaltmittel (50-52), welche an das besagte erste Netzwerk (11) und an das besagte zweite Netzwerk (12) und ebenfalls an die erste und die zweite optische Komponente (41, 42) angeschlossen sind, umfasst, und dass der erste und der zweite optische Leitungsabschluss (31, 32) Low-Split-Leitungsabschlüsse sind, und dass der redundante optische Leitungsabschluss (60) ein High-Split-Leitungsabschluss ist.

## Revendications

1. Noeud d'accès optique (1), comprenant
- une première terminaison de ligne optique (31) à connecter à un premier réseau (11) ;
- un premier composant optique (41), comprenant un ou plusieurs séparateurs et/ou combineurs optiques, connecté à la première terminaison de ligne optique (31) et à connecter à un premier équipement (25) du site du client par le biais d'une première unité optique (21);
- une deuxième terminaison de ligne optique (32) à connecter à un deuxième réseau (12) ;
- un deuxième composant optique (42), comprenant un ou plusieurs séparateurs et/ou combineurs optiques, connecté à la deuxième terminaison de ligne optique (32) et à connecter à un deuxième équipement (26) du site du client par le biais d'une deuxième unité optique (22) ; et
- des moyens de redondance (60) pour réaliser la redondance d'au moins une terminaison de ligne optique (31, 32)
**caractérisé en ce que** les moyens de redondance (60) comprennent une terminaison de ligne optique redondante (60) connectée audit premier réseau (11) et audit deuxième réseau (12) et aussi connectée par le biais de moyens de commutation (50-52) au premier et au deuxième composants optiques (41, 42) ; et **en ce que** la première et la deuxième terminaisons de ligne optique (31, 32) sont des terminaisons de ligne à séparation basse et **en ce que** la terminaison de ligne optique redondante (60) est une terminaison de ligne à séparation haute.

2. Noeud d'accès optique (1) selon la revendication 1, **caractérisé en ce que** la terminaison de ligne à séparation haute est connectée à des moyens d'accroissement de la puissance pour accroître une puissance en aval et/ou à des moyens d'accroissement de la sensibilité pour accroître une sensibilité en amont et/ou à des moyens de diminution de l'affaiblissement pour réduire un affaiblissement d'un coupleur.

3. Noeud d'accès optique (1) selon la revendication 1 ou 2, **caractérisé en ce que** les moyens de commutation comprennent un premier commutateur (51) connecté au premier composant optique (41) et à la terminaison de ligne optique redondante (60) et un deuxième commutateur (52) connecté au deuxième composant optique (42) et à la terminaison de ligne optique redondante (60).

4. Noeud d'accès optique (1) selon la revendication 3, **caractérisé en ce que** la terminaison de ligne optique redondante (60) est connectée à une branche en amont et une branche en aval, des multiplexeurs à division de longueur d'onde (61) faisant partie des deux branches et étant connectés au premier et au deuxième commutateurs (51, 52) et étant connectés par le biais d'un combineur (64) à la terminaison de ligne optique redondante (60), et un circuit série constitué d'un amplificateur (62) et d'un diviseur de puissance (63) faisant partie de la branche en aval et étant connecté aux multiplexeurs à division de longueur d'onde (61).

5. Noeud d'accès optique (1) selon la revendication 1 ou 2, **caractérisé en ce que** les moyens de commutation comprennent un troisième commutateur (50) avec un côté aval connecté au premier et au deuxième composants optiques (41, 42) et avec un côté amont connecté à la terminaison de ligne optique redondante (60).

6. Noeud d'accès optique (1) selon la revendication 1, 2, 3, 4 ou 5, **caractérisé en ce que** le noeud d'accès optique (1) comprend en outre
- une carte de fond de panier (2) pour connecter la première terminaison de ligne optique (31) au premier réseau (11) et pour connecter la deuxième terminaison de ligne optique (32) au deuxième réseau (12).

7. Noeud d'accès optique (1) selon la revendication 1, **caractérisé en ce que** ladite première terminaison de ligne optique (31) et ladite deuxième terminaison de ligne optique (32) et lesdits moyens de redondance sont inclus dans un multiplexeur optique (3, 4).

8. Procédé de réalisation de la redondance d'au moins une terminaison de ligne optique (31, 32), ladite au moins une terminaison de ligne optique (31, 32) comprenant
- une première terminaison de ligne optique (31) à connecter à un premier réseau (11) et connectée à un premier composant optique (41), comprenant un ou plusieurs séparateurs et/ou combineurs optiques, à connecter à un premier équipement (25) du site du client par le biais d'une première unité optique (21); et
- une deuxième terminaison de ligne optique (32) à connecter à un deuxième réseau (12) et connectée à un deuxième composant optique (42), comprenant un ou plusieurs séparateurs et/ou combineurs optiques, à connecter à un deuxième équipement (26) du site du client par le biais d'une deuxième unité optique (22) ;
**caractérisé en ce que** le procédé comprend l'étape de commutation d'une terminaison de ligne optique redondante (60) par le biais de moyens de commutation (50-52) connectés audit premier réseau (11) et audit deuxième réseau (12) et aussi connectés au premier et au deuxième composants optiques (41, 42) ; et **en ce que** la première et la deuxième terminaisons de ligne optique (31, 32) sont des terminaisons de ligne à séparation basse et **en ce que** la terminaison de ligne optique redondante (60) est une terminaison de ligne à séparation haute.
